# EUROPEAN PATENT APPLICATION

(11) **EP 3 260 426 A1**
(43) Date of publication of application: **27.12.2017**
(21) Application number: 15882612.3
(22) Date of filing: 19.02.2015
(51) Int. Cl.: C02F 3/12

(54) **INDUSTRIAL EFFLUENT TREATMENT SYSTEM AND TREATMENT METHOD**

(71) Applicant: Mitsubishi Heavy Industries, Ltd., Tokyo 108-8215 (JP)
(72) Inventor: UKAI, Nobuyuki, Tokyo 108-8215 (JP); OGAWA, Naoki, Tokyo 108-8215 (JP); OKINO, Susumu, Tokyo 108-8215 (JP); NAKAJIMA, Yuuji, Tokyo 108-8215 (JP); NAKASHOJI, Hiroshi, Tokyo 108-8215 (JP); SUZUKI, Hideo, Tokyo 108-8215 (JP); YOSHIOKA, Shigeru, Tokyo 108-8215 (JP); TAKEUCHI, Kazuhisa, Tokyo 108-8215 (JP)
(74) Representative: Henkel, Breuer & Partner
(86) International application number: PCT/JP2015/054621
(87) International publication number: WO 2016/132510

(57) **Abstract**

Included are: a buffer tank 12 that temporarily receives and stores therein industrial estate waste water 11; a primary treatment unit 13 configured to perform a primary treatment on effluent water 11A from a buffer tank 12; an activated sludge treatment apparatus 14 that is a secondary treatment unit configured to perform a secondary treatment on influent water 11B that has been treated by the primary treatment unit 13, by using activated sludge; an organic matter concentration measurement unit 15 configured to measure an organic matter concentration in the industrial estate waste water 11 flowing into the buffer tank 12; and an activator dispensing unit 17 configured to dispense, into the secondary treatment unit, an activator 16 that activates important microorganisms included in the activated sludge of the activated sludge treatment apparatus 14; from a result of the measurement by the organic matter concentration measurement unit 15, a composition in the influent water 11B is determined, dispensing of the activator 16 corresponding to the determined composition is executed by the control unit 20; and activity of microorganisms is improved by this dispensing of the activator 16.

## Description

### Field

The present invention relates to a treatment system and a treatment method, for industrial waste water.

### Background

Conventionally, industrial waste water containing organic matter from various industries has been treated by biological treatments, such as standard activated sludge processes. These standard activated sludge processes are biological treatment processes, in which organic waste water is aerobically subjected to biological treatments. Industrial waste water discharged from various factories is once collected in a buffer tank, and after effluent water from this buffer tank is subjected to a primary treatment, such as, for example, an oil-water separation treatment or a coagulative precipitation treatment, a secondary treatment, such as, for example, an activated sludge treatment, is carried out.

In this activated sludge treatment, for example, organic matter (phenol, benzene, and the like), nitrogen, phosphorus, and the like, that are in the industrial waste water are subjected to a biological treatment by use of activated sludge, which is a population of various microorganisms, so that effluent standards are fulfilled. Further, treated water quality of the water that has been subjected to the activated sludge treatment may be improved by a reverse osmosis membrane apparatus (RO apparatus) after the water has been subjected to a membrane treatment or the like, and this water may then be reused.

In this activated sludge treatment, water quality of the treated water flowing into an activated sludge treatment tank in terms of nitrogen and phosphorus is demanded to be maintained well at all times, and conventionally, for example, it has been proposed to control at least one of: circulating flow rate; return flow rate; aeration air flow; carbon source injection rate; excess sludge flow rate; returned water flow rate; and an early sediment bypass valve, in a sewage treatment plant, by use of C/N ratio between nitrogen components and organic components in influent water flowing into the sewage treatment plant (Patent Literature 1).

### Citation List

### Patent Literature

Patent Literature 1: Japanese Unexamined Patent Application Publication No. 2003-200190 A

### Summary

### Technical Problem

However, the proposal of Patent Literature 1 has a problem that the proposal does not contribute to improvement of organic matter treatment speed of organisms when organic matter loading in the treated water is increased.

In particular, the countermeasure of Patent Literature 1 has a problem that, in a case where the organic matter loading in the treated water is drastically increased in a short period of time, the effect of the countermeasure is less than the increase in the organic matter loading, and thus worsening of the organic matter concentration in the treated water is unavoidable and waste water standards are unable to be fulfilled.

A fluctuation of 4% or more per hour on average (for example, a case where the organic matter concentration increases fivefold in about two hours), for example, is supposed as the drastic increase in the organic matter loading in a short period of time, but such a drastic fluctuation is unable to be promptly dealt with by conventional waste water treatment techniques.

Therefore, emergence of an industrial waste water treatment system is longed for, the industrial waste water treatment system enabling measures to be taken, the measures increasing treatment speed of an activated sludge treatment in advance even in a case where, for example, organic matter loading in treated water is increased in a short period of time when industrial estate waste water collected from various factories is treated.

In view of the above described problems, an object of the present invention is to provide a treatment system and a treatment method, for industrial waste water, the treatment system and treatment method enabling their treatment performance to be already increased when a drastic increase in organic matter concentration in treated water from an industrial estate arrives at an activated sludge treatment apparatus.

### Solution to Problem

A first invention according to the present invention for solving the above described problems is an industrial waste water treatment system including a primary treatment unit configured to perform a primary treatment on industrial estate waste water, a secondary treatment unit configured to perform a secondary treatment on influent water that has been treated by the primary treatment unit, by using activated sludge, an organic matter concentration measurement unit configured to measure an organic matter concentration in the industrial estate waste water flowing into the primary treatment unit, and an activator dispensing unit configured to dispense, into the secondary treatment unit, an activator that activates important microorganisms included in the activated sludge. The industrial waste water treatment system is configured to determine, from a result of the measurement by the organic matter concentration measurement unit, a composition in the influent water, perform dispensing of an activator corresponding to the determined composition, and improve activity of the important microorganisms by this dispensing of the activator.

A second invention according to the first invention is the industrial waste water treatment system. The primary treatment unit has a buffer tank that temporarily receives and stores therein the industrial estate waste water, and an organic matter concentration in the industrial estate waste water flowing into the buffer tank is measured by the organic matter concentration measurement unit.

A third invention according to the first or second invention is the industrial waste water treatment system including a microorganism abundance ratio measurement unit configured to perform abundance ratio measurement for the important microorganisms of the secondary treatment unit. The industrial waste water treatment system is configured to determine, based on results measured by the microorganism abundance ratio measurement unit, whether or not the important microorganisms corresponding to the composition in the influent water found from the result of the measurement by the organic matter concentration measurement unit are appropriate, and if, as a result of the determination, the important microorganisms are not appropriate, the industrial waste water treatment system is configured to improve activity of important microorganisms contributing to an activated sludge treatment in the secondary treatment unit by dispensing an activator corresponding to the determined composition.

A fourth invention according to the first or second invention is the industrial waste water treatment system including a respiration rate measurement unit configured to find a state of activity of microorganisms of the secondary treatment unit. The industrial waste water treatment system is configured to determine whether or not a result of measurement by the respiration rate measurement unit is appropriate, and if, as a result of the determination, the result is not appropriate, the industrial waste water treatment system is configured to improve activity of microorganisms contributing to a treatment in the secondary treatment unit by dispensing an activator corresponding to the determined composition.

A fifth invention according to any one of the second to fourth inventions is the industrial waste water treatment system including a bypass line that draws out a part of influent water before the influent water flows into the buffer tank, and that bypasses the primary treatment unit. The industrial waste water treatment system is configured to perform mixture with the influent water flowing into the secondary treatment unit.

A sixth invention according to any one of the first to fourth inventions is the industrial waste water treatment system. If an organic matter concentration in the influent water is high, a high concentration waste water storage tank that temporarily stores the influent water having the high organic matter concentration from the primary treatment unit is provided, and the influent water having the high organic matter concentration, instead of the activator, is mixed with the influent water flowing into the secondary treatment unit.

A seventh invention is an industrial waste water treatment system including a primary treatment unit configured to perform a primary treatment on industrial estate waste water, a secondary treatment unit configured to perform a secondary treatment on influent water that has been treated by the primary treatment unit, by using microorganisms, an activator dispensing unit configured to dispense, into the secondary treatment unit, an activator that activates the microorganisms, and a microorganism abundance ratio measurement unit configured to perform analysis on types of important microorganisms of the secondary treatment unit. The industrial waste water treatment system is configured to determine, based on results analyzed by the microorganism abundance ratio measurement unit, whether or not the microorganisms corresponding to a composition in the influent water are appropriate, and if, as a result of the determination, the microorganisms are not appropriate, the industrial waste water treatment system is configured to improve activity of important microorganisms contributing to an activated sludge treatment of the secondary treatment unit by dispensing an activator corresponding to the determined composition.

A eighth invention according to the seventh invention is the industrial waste water treatment system. The primary treatment unit has a buffer tank that temporarily receives and stores therein the industrial estate waste water.

A ninth invention according to the eighth invention is the industrial waste water treatment system including a bypass line that draws out a part of influent water before the influent water flows into the buffer tank, and bypasses the primary treatment unit. The industrial waste water treatment system is configured to perform mixture with the influent water flowing into the secondary treatment unit.

A tenth invention according to any one of the seventh to ninth inventions is the industrial waste water treatment system. If an organic matter concentration in the influent water is high, a high concentration waste water storage tank that temporarily stores the influent water having the high organic matter concentration from the primary treatment unit is provided, and the influent water having the high organic matter concentration, instead of the activator, is mixed with the influent water flowing into the secondary treatment unit.

A eleventh invention according to any one of the first to tenth inventions is the industrial waste water treatment system including a membrane treatment apparatus configured to perform a membrane treatment on effluent water from the secondary treatment unit, and a regeneration treatment apparatus configured to regenerate the effluent water that has been treated by the membrane treatment apparatus.

A twelfth invention is an industrial waste water treatment method including a primary treatment process of performing a primary treatment on industrial estate waste water, a secondary treatment process of performing a secondary treatment on influent water that has been treated in the primary treatment process, by using activated sludge, an organic matter concentration measurement process of measuring an organic matter concentration in the industrial estate waste water flowing into the primary treatment process, and an activator dispensing process of dispensing, into the secondary treatment process, an activator that activates important microorganisms included in the activated sludge. From a result of the measurement in the organic matter concentration measurement process, a composition in the influent water is determined, an activator corresponding to the determined composition is dispensed, and activity of the important microorganisms is improved by this dispensing of the activator.

A thirteenth invention according to the twelfth invention is the industrial waste water treatment method. In the primary treatment process, the industrial estate waste water is temporarily received and stored, and an organic matter concentration in the industrial estate waste water flowing in before this storage is measured.

A fourteenth invention according to the twelfth or thirteenth invention is the industrial waste water treatment method including a process of performing abundance ratio measurement for the important microorganisms in the secondary treatment process. Based on results of the abundance ratio measurement for the important microorganisms, whether or not microorganisms corresponding to the composition in the influent water found from the result of the measurement in the organic matter concentration measurement process are appropriate is determined, and if, as a result of the determination, the microorganisms are not appropriate, activity of important microorganisms contributing to an activated sludge treatment in the secondary treatment process is improved by an activator being dispensed, the activator corresponding to the determined composition.

A fifteenth invention according to the twelfth or thirteenth invention is the industrial waste water treatment method including a respiration rate measurement process of finding a state of activity of microorganisms of the secondary treatment process. Whether or not a result of measurement in the respiration rate measurement process is appropriate is determined, and if, as a result of the determination, the result is not appropriate, activity of microorganisms contributing to a treatment in the secondary treatment process is improved by an activator being dispensed, the activator corresponding to the determined composition.

A sixteenth invention according to any one of the twelfth to fifteenth inventions is the industrial waste water treatment method including a process of drawing out a part of influent water before the influent water flows into a storage process, and bypassing the primary treatment process. Mixture with the influent water flowing into the secondary treatment process is performed.

A seventeenth invention according to any one of the twelfth to sixteenth inventions is the industrial waste water treatment method. If an organic matter concentration of the influent water is high, a process of temporarily storing influent water of the primary treatment process is provided, and the influent water having the high organic matter concentration, instead of the activator, is mixed with the influent water flowing into the secondary treatment process.

A eighteenth invention is an industrial waste water treatment method including a primary treatment process of performing a primary treatment on industrial estate waste water, a secondary treatment process of performing a secondary treatment on influent water that has been treated in the primary treatment process, by using microorganisms, an activator dispensing process of dispensing, into the secondary treatment process, an activator that activates the microorganisms, and a microorganism abundance ratio measurement process of performing analysis on types of important microorganisms of the secondary treatment process. Based on results analyzed in the microorganism abundance ratio measurement process, whether or not the microorganisms corresponding to a composition in the influent water are appropriate is determined, and if, as a result of the determination, the microorganisms are not appropriate, activity of important microorganisms contributing to an activated sludge treatment in the secondary treatment process is improved by an activator being dispensed, the activator corresponding to the determined composition.

A nineteenth invention according to the eighteenth invention is the industrial waste water treatment method. In the primary treatment process, the industrial estate waste water is temporarily received and stored in a buffer tank.

A twentieth invention according to the nineteenth invention is the industrial waste water treatment method including a bypass line process of drawing out a part of influent water before the influent water flows into the buffer tank, and bypassing the primary treatment process. Mixture with the influent water flowing into the secondary treatment process is performed.

A twenty-first invention according to any one of the twelfth to twentieth inventions is the industrial waste water treatment method. If an organic matter concentration of the influent water is high, the influent water having the high organic matter concentration from the primary treatment process is temporarily stored in a high concentration waste water storage tank, and the influent water having the high organic matter concentration, instead of the activator, is mixed with the influent water flowing into the secondary treatment process.

A twenty-second invention according to any one of the twelfth to twenty-first inventions is the industrial waste water treatment method including a membrane treatment process of performing a membrane treatment on effluent water from the secondary treatment process, and a regeneration treatment process of regenerating the effluent water that has been treated in the membrane treatment process.

### Advantageous Effects of Invention

According to the present invention, even in a case where organic matter loading in treated water is increased in a short period of time, for example, when industrial estate waste water collected from various factories is treated; by inclusion of an organic matter concentration measurement unit that measures an organic matter concentration in industrial waste water flowing in and an activator dispensing unit that dispenses, into a secondary treatment unit, an activator that activates microorganisms, measures for increasing, in advance, treatment speed of the microorganisms in an activated sludge treatment apparatus, which is the secondary treatment unit, are able to be taken.

### Brief Description of Drawings

FIG. 1 is a schematic diagram of an industrial waste water treatment system according to a first embodiment.
FIG. 2 is a schematic diagram of another industrial waste water treatment system according to the first embodiment.
FIG. 3 is a schematic diagram of yet another industrial waste water treatment system according to the first embodiment.
FIG. 4 is a schematic diagram of still another industrial waste water treatment system according to the first embodiment.
FIG. 5 is a schematic diagram of another industrial waste water treatment system according to the first embodiment.
FIG. 6 is a diagram illustrating relations between treatment time and COD concentration (oxygen demand by use of potassium dichromate (CODCr)) in an activated sludge treatment apparatus.
FIG. 7 is a schematic diagram of yet another industrial waste water treatment system according to the first embodiment.
FIG. 8 is a schematic diagram of still another industrial waste water treatment system according to the first embodiment.
FIG. 9 is a schematic diagram of an industrial waste water treatment system according to a second embodiment.
FIG. 10 is a diagram illustrating an example of results measured by a microorganism abundance ratio measurement unit.
FIG. 11 is a flow diagram of a process, in which the microorganism abundance ratio measurement unit is used.
FIG. 12 is a schematic diagram of an industrial waste water treatment system according to a third embodiment.
FIG. 13 is a diagram illustrating results of measurement of respiration rate.
FIG. 14 is a schematic diagram of an industrial waste water treatment system according to a fourth embodiment.
FIG. 15 is a diagram illustrating a relation between treatment time and COD concentration in waste water.
FIG. 16 is a diagram illustrating activated sludge simulation results for concentration of treated water, without an activator.
FIG. 17 is a diagram illustrating activated sludge simulation results for concentration of treated water, with an activator.
FIG. 18 is a diagram illustrating other activated sludge simulation results for concentration of treated water, with an activator.

### Description of Embodiments

Hereinafter, preferred embodiments of the present invention will be described in detail, by reference to the appended drawings. The present invention is not limited by these embodiments, and when there are plural embodiments, the present invention also includes those configured by combining any of these embodiments.

### First Embodiment

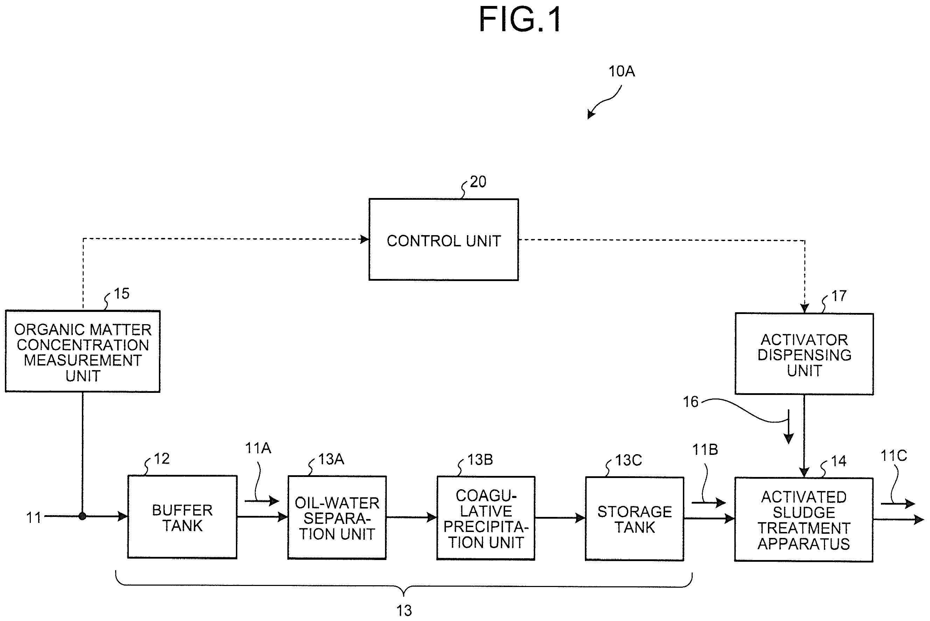

FIG. 1 is a schematic diagram of an industrial waste water treatment system according to a first embodiment.

As illustrated in FIG. 1, an industrial waste water treatment system 10A according to this embodiment includes: a buffer tank 12 that temporarily receives and stores therein industrial estate waste water 11; a primary treatment unit 13 that performs a primary treatment on effluent water 11A from the buffer tank 12; an activated sludge treatment apparatus 14 that is a secondary treatment unit that performs a secondary treatment on influent water 11B that has been treated by the primary treatment unit 13, by using activated sludge; an organic matter concentration measurement unit 15 that measures organic matter concentration in the industrial estate waste water 11 flowing into the buffer tank 12; and an activator dispensing unit 17 that dispenses, into the secondary treatment unit, an activator 16 that activates important microorganisms included in the activated sludge of the activated sludge treatment apparatus 14; and from a result of the measurement by the organic matter concentration measurement unit 15, a composition in the influent water 11B is determined, dispensing of the activator 16 corresponding to the determined composition is performed by a control unit 20, and by this dispensing of the activator 16, activity of microorganisms is improved.

According to this embodiment, in a case where, for example, organic matter loading in the industrial estate waste water 11, which is collected from various factories and is treated water, increases in a short period of time when the industrial estate waste water 11 is treated; for a fluctuation thereof of 4% or more per hour on average, for example, by the inclusion of the organic matter concentration measurement unit 15 that measures the organic matter concentration in the industrial estate waste water 11 flowing into the buffer tank 12 and the activator dispensing unit 17 that dispenses, into the secondary treatment unit, the activator 16 that activates the activated sludge, an industrial waste water treatment system is able to be provided, the industrial waste water treatment system enabling measures to be taken, the measures increasing, in advance, treatment speed of the microorganisms in the activated sludge treatment apparatus 14 that is the secondary treatment unit.

The value, 4%, referred to in the expression, "fluctuation of 4% or more per hour", is the maximum value (10°C) of growth rate of the microorganisms composing the activated sludge. If the rate of increase in the organic matter concentration is equal to or less than 4%/H, according to the load fluctuation, the activated sludge is able to undergo growth. In contrast, if the rate exceeds 4%/H, the growth of the activated sludge will not catch up with the increase in the organic matter concentration, and the treated water will be deteriorated.

In contrast, even if the increase in the organic matter concentration exceeds 4%/H, when, like in this embodiment, the activated sludge is activated by input of the activator 16 after increase in organic matter concentration in influent water is observed by the organic matter concentration measurement unit 15 and before that high concentration waste water arrives at the activated sludge treatment apparatus 14, the increase in the concentration of the treated water is reduced.

As the fluctuation of 4% or more per hour on average, for example, a case where the organic matter concentration increases fivefold in about two hours is supposed, but the embodiment is not limited to this case.

According to the present invention, the industrial estate waste water 11 is a mixture of household waste water (sewage) and industrial waste water, which are generated in an industrial estate. Although organic matter sources in a composition of the industrial waste water depend on kinds of operations in the real estate: for example, oils, such as lubricating oils; paints; solvents; liquid organic waste; carbohydrate solutions; juices; acid fermentation liquids; and oils and fats, correspond to the organic matter sources.

The organic matter concentration measurement unit 15 measures the organic matter concentration in the industrial estate waste water 11 when the industrial estate waste water 11 flows into the buffer tank 12. Examples of an index for measuring the organic matter concentration include, biochemical oxygen demand (BOD), chemical oxygen demand (COD), total organic carbon (TOC), oil content, and ultraviolet absorbance.

There are two types of COD, which are: oxygen demand by use of potassium permanganate (CODMn); and oxygen demand by use of potassium dichromate (CODCr).

The organic matter concentration measurement unit 15 measures the organic matter concentration in the industrial estate waste water 11, and sends a result of the measurement to the control unit 20.

The primary treatment unit 13 includes, for example, an oil-water separation unit 13A, a coagulative precipitation unit 13B, and a storage tank 13C; and performs the primary treatment on the industrial estate waste water 11. An early sedimentation apparatus, or the like, may be added.

The buffer tank 12 stores therein the industrial estate waste water 11 for a certain period of time, and has hydraulic retention time (HRT). Herein, the hydraulic retention time (HRT (H)) = volume of buffer tank [m³]/flow rate of liquid Q [m³/h]. As to the primary treatment unit, although the primary treatment unit 13 is configured to include the buffer tank 12 in this embodiment, the present invention may include a primary treatment unit 13 without the buffer tank 12.

The secondary treatment unit corresponds to the activated sludge treatment apparatus 14, and a method thereof. Specifically, examples thereof include: a standard activated sludge process; a membrane bioreactor (MBR); a method, in which a microfiltration membrane (MF membrane) or an ultrafiltration membrane (UF membrane) is used; a bio-film reactor (BFR); and a method, in which an organism carrier is used.

The following (1) to (8) are examples of a combination of the secondary treatment unit, a membrane separation apparatus provided downstream therefrom, and a regeneration apparatus for water regeneration provided downstream therefrom.
(1) A combination where the secondary treatment unit is a standard activated sludge process, the membrane treatment apparatus is an ultrafiltration membrane (UF membrane), and the regeneration apparatus is a reverse osmosis membrane apparatus
(2) A combination where the secondary treatment unit is a standard activated sludge process, the membrane treatment apparatus is a microfiltration membrane (MF membrane), and the regeneration apparatus is a reverse osmosis membrane apparatus
(3) A combination where the secondary treatment unit is a membrane bioreactor (MBR), and the regeneration apparatus is a reverse osmosis membrane apparatus
(4) A combination where the secondary treatment unit is a bio-film reactor (BFR), the membrane treatment apparatus is an ultrafiltration membrane (UF membrane), and the regeneration apparatus is a reverse osmosis membrane apparatus
(5) A combination where the secondary treatment unit is a bio-film reactor (BFR), the membrane treatment apparatus is a microfiltration membrane (MF membrane), and the regeneration apparatus is a reverse osmosis membrane apparatus
(6) A combination where the secondary treatment unit is a bio-film reactor (BFR) and a membrane bioreactor (MBR), and the regeneration apparatus is a reverse osmosis membrane apparatus
(7) A combination where the secondary treatment unit is an organism carrier, the membrane treatment apparatus is an ultrafiltration membrane (UF membrane), and the regeneration apparatus is a reverse osmosis membrane apparatus
(8) A combination where the secondary treatment unit is an organism carrier, the membrane treatment apparatus is a microfiltration membrane (MF membrane), and the regeneration apparatus is a reverse osmosis membrane apparatus

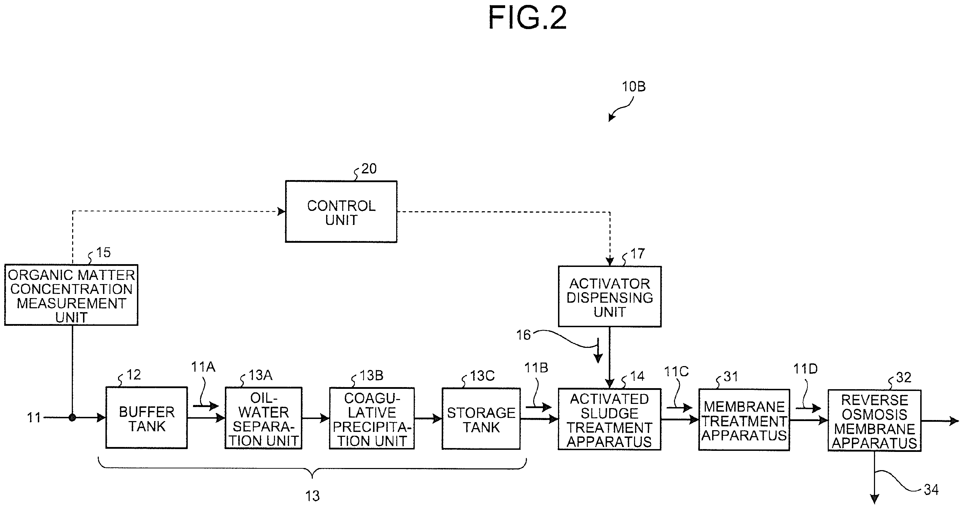

FIG. 2 is a schematic diagram of another industrial waste water treatment system according to the first embodiment.

In an industrial waste water treatment system 10B of this embodiment, a membrane treatment apparatus (UF membrane, MF membrane, or MBR) 31 is further provided downstream from the activated sludge treatment apparatus 14 that is the secondary treatment unit, and a reverse osmosis membrane apparatus 32 having a reverse osmosis membrane (RO membrane) is further provided downstream from the membrane treatment apparatus 31, so that regenerated water 33 is manufactured, the reverse osmosis membrane apparatus 32 being a water regeneration apparatus that performs treatment on treated water 11D from the membrane treatment apparatus 31. The reference sign 34 corresponds to concentrated water.

Other than the use of the reverse osmosis membrane apparatus 32, as a water regeneration method, for example, a nano-filter (NF), electrodialysis (ED), electrodialysis reversal (EDR), or electrostatic deionization (CDI) may be used.

As a result, since the activator has been dispensed and the treatment speed has been increased in advance against a fluctuation in the organic matter concentration, significant increase in the organic matter concentration flowing into the reverse osmosis membrane apparatus 32 in the regeneration process is able to be prevented. As a result, fouling (for example, biofouling, and chemical fouling) of the RO membrane is able to be prevented.

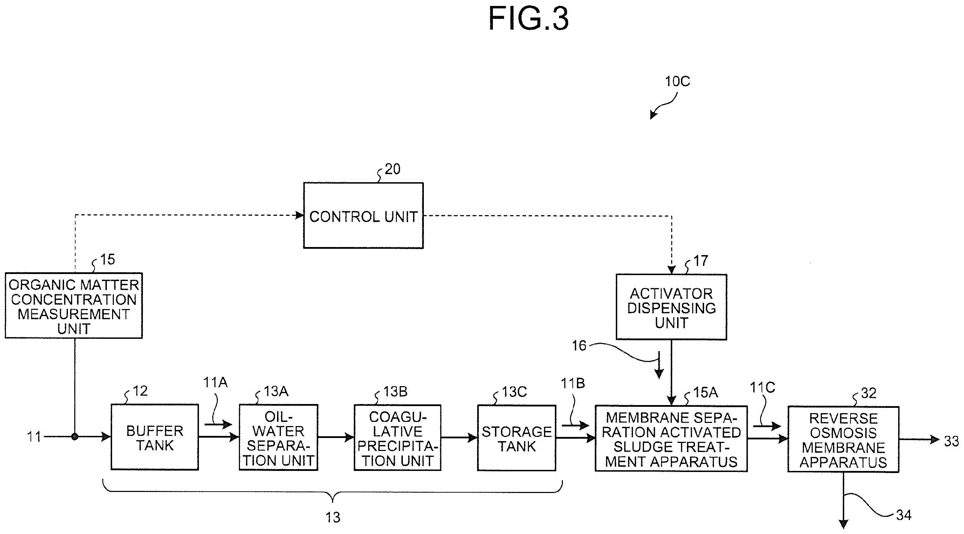

FIG. 3 is a schematic diagram of yet another industrial waste water treatment system according to the first embodiment.

In an industrial waste water treatment system 10C of this embodiment, a membrane separation activated sludge treatment apparatus (MBR) 15A is provided instead of the activated sludge treatment apparatus 14 that is the secondary treatment unit in the industrial waste water treatment system 10B illustrated in FIG. 2, and the reverse osmosis membrane apparatus 32 that is a water regeneration apparatus that performs treatment on treated water 11C from the membrane separation activated sludge treatment apparatus 15A is provided downstream from the membrane separation activated sludge treatment apparatus 15A, so that regenerated water 33 is manufactured.

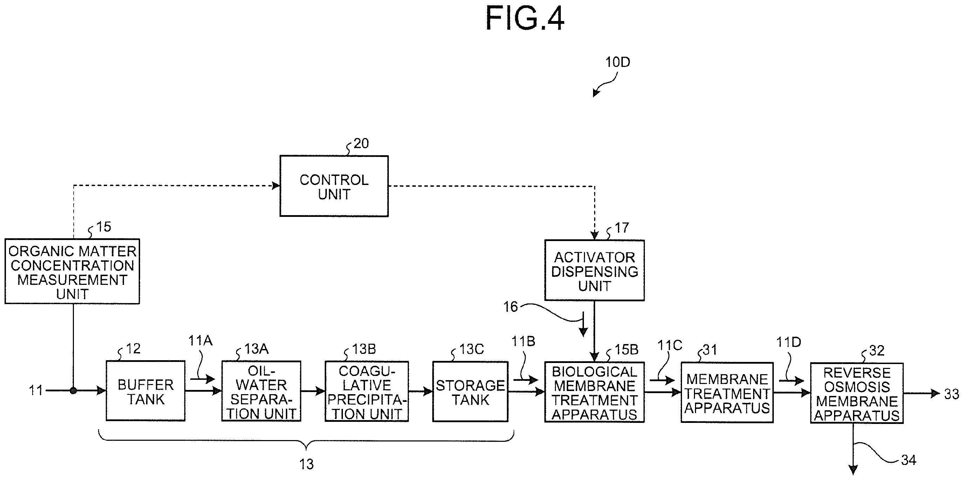

FIG. 4 is a schematic diagram of still another industrial waste water treatment system according to the first embodiment.

In an industrial waste water treatment system 10D of this embodiment, a biological membrane treatment apparatus (BFR) 15B is provided instead of the activated sludge treatment apparatus 14 that is the secondary treatment unit in the industrial waste water treatment system 10B illustrated in FIG. 2, the membrane treatment apparatus (for example, a UF membrane) 31 is further provided, and the reverse osmosis membrane apparatus 32 that is a water regeneration apparatus that performs treatment on treated water 11D from the membrane treatment apparatus 31 is further provided downstream from the membrane treatment apparatus 31, so that regenerated water 33 is manufactured.

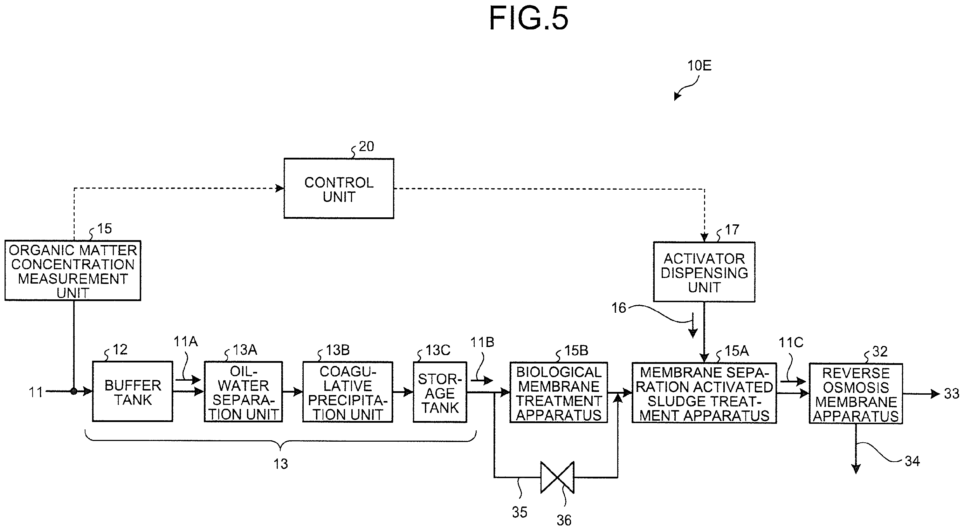

FIG. 5 is a schematic diagram of another industrial waste water treatment system according to the first embodiment.

In an industrial waste water treatment system 10E of this embodiment, the biological membrane treatment apparatus (BFR) 15B is provided upstream of the membrane separation activated sludge treatment apparatus (MBR) 15A that is the secondary treatment unit in the industrial waste water treatment system 10C illustrated in FIG. 3, and the reverse osmosis membrane apparatus 32 that is a water regeneration apparatus that performs treatment on treated water 11C from the membrane separation activated sludge treatment apparatus (MBR) 15A is provided downstream from the membrane separation activated sludge treatment apparatus (MBR) 15A, so that regenerated water 33 is manufactured.

In this embodiment, a bypass line 35 that normally bypasses the biological membrane treatment apparatus 15B is provided, and when there is a fluctuation and treatment in the biological membrane treatment apparatus 15B is needed, a valve 36 of the bypass line 35 is closed, rough treatment is performed in the biological membrane treatment apparatus 15B, and thereafter main treatment is performed in the membrane separation activated sludge treatment apparatus (MBR) 15A.

As the activator 16 to be dispensed to the activated sludge treatment apparatus 14, any of, for example: organic matter and carbon sources (alcohols, such as ethanol and methanol; hydrocarbons, such as glucose; aromatic hydrocarbons, such as phenol; saccharides; and organic acids, such as acetic acid); nutritive salts (such as nitrogen, phosphorus, and potassium); and microbiologic agents (such as activated sludge, microorganisms, yeast, and dry matter thereof), may be used. The drying method therefor may be unheated vacuum drying, freeze drying, or the like. The activator 16 may also be: an extract (such as yeast extract, or meat extract); waste (such as liquid organic waste, a carbohydrate solution, a juice, an acid fermentation liquid, an oil, or a fat); high concentration waste water (such as waste water having a concentration at least higher than that of the industrial waste water measured by the organic matter concentration measurement unit) (the high concentration waste water generated from the industrial estate waste water is temporarily stored and used little by little upon such load fluctuation); activated sludge (such as a concentrate of activated sludge generated in the facility, or dewatered sludge); or the like.

In this system, a role of the primary treatment unit 13 is to smooth the load fluctuation (concentration fluctuation) due to the buffer tank 12 in particular, and by application of the activator 16 after implementation of this smoothing, larger concentration fluctuation is able to be dealt with.

Therefore, preferably, the hydraulic retention time (HRT) of this smoothing is two hours or longer, and more desirably three hours or longer. Further, a time period from the measurement by the organic matter concentration measurement unit 15 to the arrival at the secondary treatment unit (activated sludge treatment apparatus 14) is preferably two hours or longer, and more desirably three hours or longer.

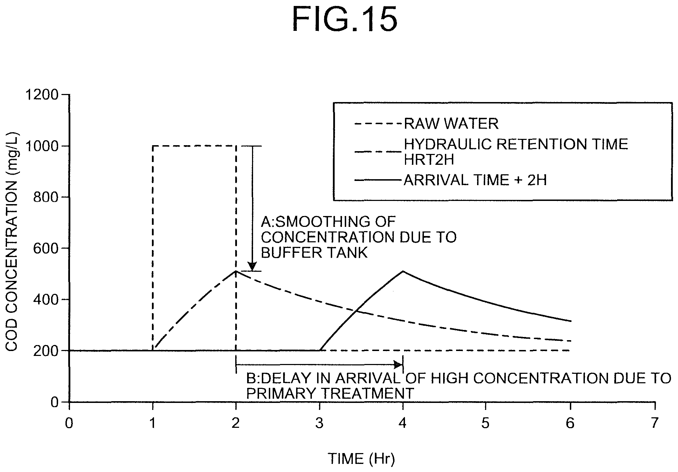

FIG. 15 is a diagram illustrating a relation between treatment time and COD concentration in waste water. In FIG. 15, the horizontal axis corresponds to the time, and the vertical axis corresponds to the COD concentration.

FIG. 15 illustrates effects due to smoothing of concentration due to the buffer tank 12 and delay in arrival due to the primary treatment unit 13.

In FIG. 15, the industrial estate waste water 11 that is raw water corresponds to COD concentration by the organic matter concentration measurement unit 15. This is illustrated with a broken line in the figure. Hydraulic retention time HRT2H corresponds to COD concentration in the buffer tank 12 or in the effluent water 11A. This is illustrated with an alternate long and short dash line in the figure. Arrival time + 2H corresponds to COD concentration in the storage tank 13C or in the influent water 11B. This is illustrated with a solid line in the figure.

Calculation was performed under conditions where a complete mixing tank was supposed as the form of the container, for the hydraulic retention time HRT2H of the buffer tank 12.

A total volume of the oil-water separation unit 13A, the coagulative precipitation unit 13B, and the storage tank 13C was assumed to be twice the flow rate (corresponding to an arrival time of two hours), and a plug flow tank (where there is no mixture of upper stream and lower stream) was supposed as the form of the container.

In FIG. 15, firstly by smoothing of concentration by the buffer tank 12, the COD concentration is reduced (reference sign A in FIG. 15). In this case, the maximum concentration becomes low, the minimum concentration becomes high, and the change in concentration over time becomes gentle.

Thereby, by a drastic fluctuation of organic matter concentration (= high concentration raw water) being changed to a gentle fluctuation of concentration, treatment within organic matter treatment performance of the activated sludge is enabled, or treatment is enabled due to improvement in treatment performance associated with growth of the activated sludge.

A delay in arrival of high concentration raw water due to the buffer tank 12, the oil-water separation unit 13A, the coagulative precipitation unit 13B, and the storage tank 13C is caused (reference numeral B in FIG. 15).

By addition of the activator in a time period of this delay in arrival, in a period up to arrival of a high peak of organic matter to the activated sludge tank, the amount of activated sludge is able to be increased or the activity of the activated sludge is able to be increased.

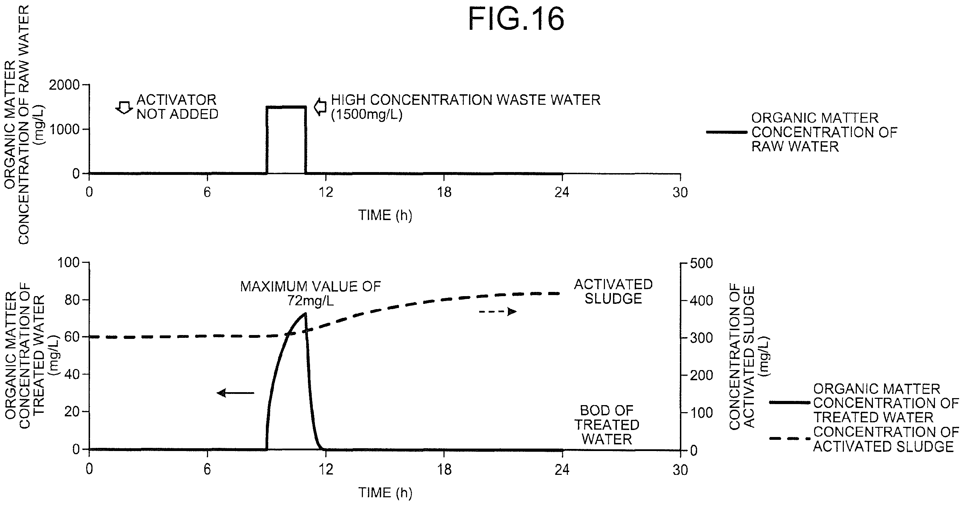

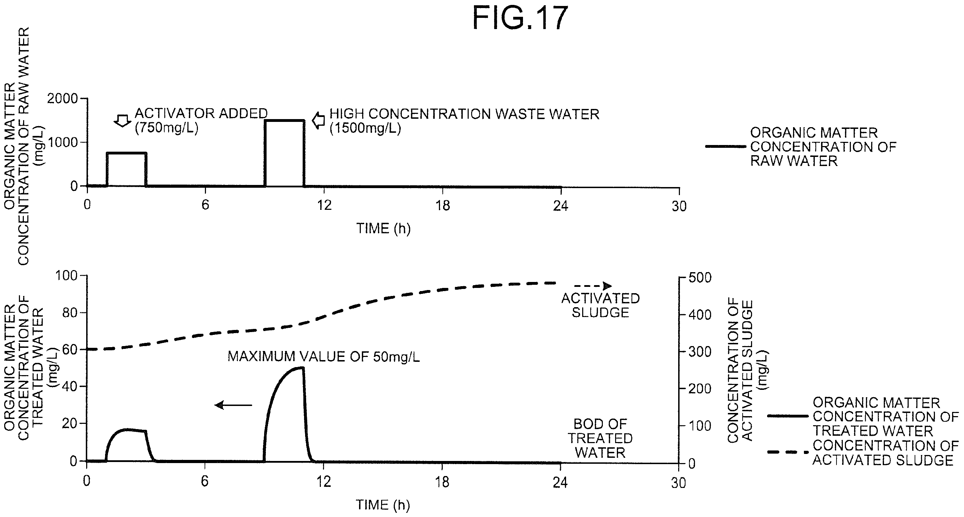

FIG. 16 and FIG. 17 are diagrams each illustrating activated sludge simulation results for concentration of treated water, with or without an activator. In each of FIG. 16 and FIG. 17: the upper graph illustrates a relation between time and organic matter concentration [mg/L] of raw water (industrial waste water); and in the lower graph, the horizontal axis corresponds to time, the left vertical axis to organic matter concentration [mg/L] of treated water, and the right vertical axis to concentration [mg/L] of activated sludge.

FIG. 16 corresponds to a case without the activator, and FIG. 17 corresponds to a case with the activator.

In the case of FIG. 16 (without the activator), in the 9th to 11th hours, waste water having a high concentration of 1500 mg/L flows into the activated sludge tank, and the concentration of the treated water increases simultaneously therewith and becomes 72 mg/L at most.

Simultaneously with this inflow (in the 9th hour), the concentration of activated sludge starts to increase, but is unable to increase up to an activated sludge concentration that enables treatment of the increase in the organic matter concentration of the raw water.

Accordingly, even if the concentration of activated sludge starts to increase after the organic matter concentration in the raw water increases, the increase in the organic matter concentration of the raw water is unable to be dealt with.

In contrast, in the case of FIG. 17 (with the activator), although the organic matter concentration of the raw water increases in the 9th to 11th hours, in response to detection of an increase in the concentration, the activator is added in advance in the 1st to 3rd hours. The activator concentration is 750 mg/L, which is 1/2 of the value of the high concentration waste water (= 1500 mg/L).

Thereby, the concentration of activated sludge starts to increase, and by the time the high concentration waste water in the 9th hour arrives, the sludge concentration is able to be already increased "in advance".

As described above, in the case with the activator, the organic matter concentration of the treated water is 50 mg/L at most, and as compared to the case without the activator (72 mg/L), the concentration is able to be reduced therefrom.

By the addition of the activator, the treated water is temporarily deteriorated, and thus, the addition concentration and time of the activator need to be adjusted so as to maintain the concentration of the treated water in a permissible range.

The apparatus in this numerical simulation is formed of a single membrane bioreactor tank (one MBR), and reactions that have been taken into consideration are: adsorption of organic matter to the activated sludge; oxidative decomposition of the adsorbed organic matter by the activated sludge; and autolysis of the activated sludge.

Next, an operation method of waste water treatment by use of the industrial waste water treatment system according to this embodiment will be described.

Since certain waste water is discharged from each factory, normally, there is not much fluctuation in the industrial estate waste water 11. However, in a case where a drastic fluctuation in the concentration is detected, for example, in a case where an increase of the organic matter concentration fivefold in two hours is detected, by the organic matter concentration measurement unit 15; the control unit 20 determines that the case is abnormal.

As a result of this determination, the activator 16 is added to the activated sludge treatment apparatus 14 of the secondary treatment unit from the activator dispensing unit 17, and a high organic matter concentration state is created in advance in the activated sludge treatment apparatus 14 before the fluctuation of the concentration of the treated water arrives the activated sludge treatment apparatus 14.

A range of this high organic matter concentration is desirably a concentration range that is from about the same as the above-described detected concentration, to about 1/2 of the above described detected concentration. The time period during which the organic matter concentration is made high is desirably a short period of time equal to or longer than ten minutes and less than two hours.

Further, as to the addition frequency of the activator 16, the activator 16 may be added continuously as described above, or may be added a plural number of times intermittently.

As described above, the addition concentration of the activator 16 is 100% to 50%, the addition time period is equal to or longer than ten minutes and less than two hours, and the addition frequency is continuous or intermittent; but most desirably, the amount of activated sludge is the minimum amount, by which the concentration of the treated water upon inflow of high concentration waste water becomes equal to or less than the permissible range.

Specifically, the addition is performed continuously by use of the whole time period in which the high concentration waste water arrives (eight hours during the 1st to 9th hours in FIG. 17). The lower the concentration after that mixture of the activator is able to be made, the more reduced the deterioration of the concentration of the treated water and the increase in the activator addition cost are able to be.

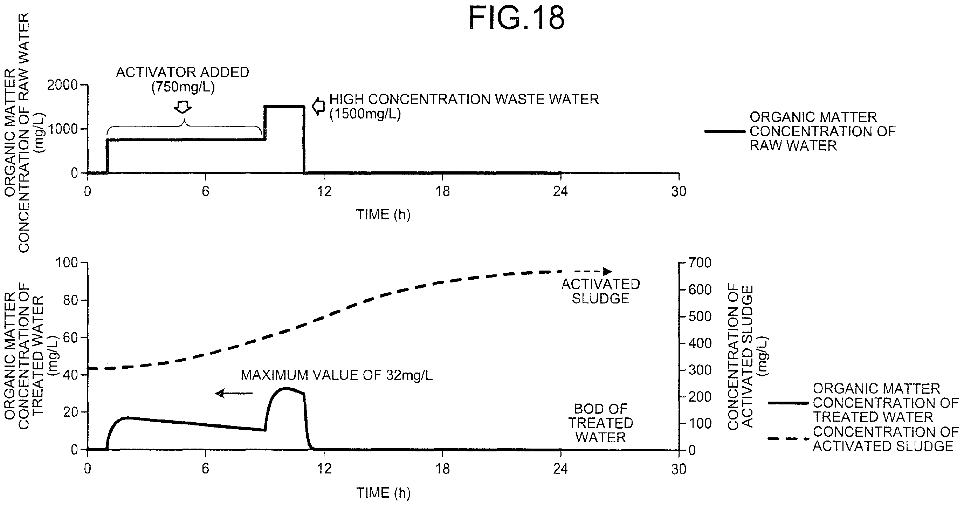

FIG. 18 is a diagram illustrating other activated sludge simulation results for concentration of treated water, with an activator.

FIG. 18 is a case where the activator 16 is continuously added (upper graph in FIG. 18), the maximum value of the organic matter concentration in the treated water is 32 mg/L, and as compared to the maximum value, 50 mg/L, of the organic matter concentration in the treated water in FIG. 17, further reduction is possible.

Further, results of the measurement of organic matter concentration over time by the organic matter concentration measurement unit 15 may be input, as input conditions, to an arithmetic unit, the concentration of the treated water 11C may be predicted by numerical simulation in this arithmetic unit, and the addition concentration of the activator 16 may be determined so that the concentration of this treated water 11C satisfies a predetermined condition (for example, a treated water concentration reference value, or the like). The activator 16 is added by the control unit 20 via the activator dispensing unit 17 so that the determined addition concentration is obtained.

The treated water concentration reference value is a numerical value arbitrarily set by a user, a manager, or the like, of the waste water treatment facility, and refers to a concentration demanded for the treated water. The treated water concentration reference value is the concentration demanded for the treated water, because the treated water concentration reference value depends on downstream use conditions and legal restraints, for example, the downstream use conditions being conditions of concentration of water supplied to the reverse osmotic membrane RO, the legal restraints corresponding to effluent water quality standards voluntarily set forth by the country, municipality, or waste water treatment sump.

Effects of the operation of the present invention include, in addition to the reduction in the organic matter concentration, for example, reduction in the nitrogen concentration, phosphorus concentration, suspended solid concentration, and the like.

Further, examples of treated water quality can include the concentration of the water that has been subjected to the activated sludge treatment being equal to or less than a COD_{cr} of 50 mg/L according to voluntary standards in the waste water treatment and regeneration plant.

Other examples of the reference value include, for example, according to Effluent Standards under Water Pollution Prevention Act, BOD < 160 mg/L, CODₘₙ < 160 mg/L, and the like.

Further, examples of effluent standards of waste water treatment facilities can include, for example, standards, such as BOD < 10 mg/L, COD < 20 mg/L, total nitrogen < 10 mg/L, total phosphorus < 1 mg/L, and the like, but the present invention is not limited to these examples.

According to this embodiment, by the activated sludge being made to experience high organic matter concentration in advance before a drastic increase in the concentration in the activated sludge treatment apparatus 14, the treatment speed of the activated sludge is able to be increased, or the concentration of the sludge is able to be increased.

Thereby, by the time the drastic increase in the concentration arrives at the activated sludge treatment apparatus 14, the treatment performance of the microorganisms in the activated sludge treatment apparatus 14 is increased already.

If the method of the present invention is not used, the increase in the sludge concentration or treatment speed needed for the speed of increase in the organic matter concentration is unable to be obtained, the organic matter concentration of the treated water is increased, and the water quality of the treated water is deteriorated.

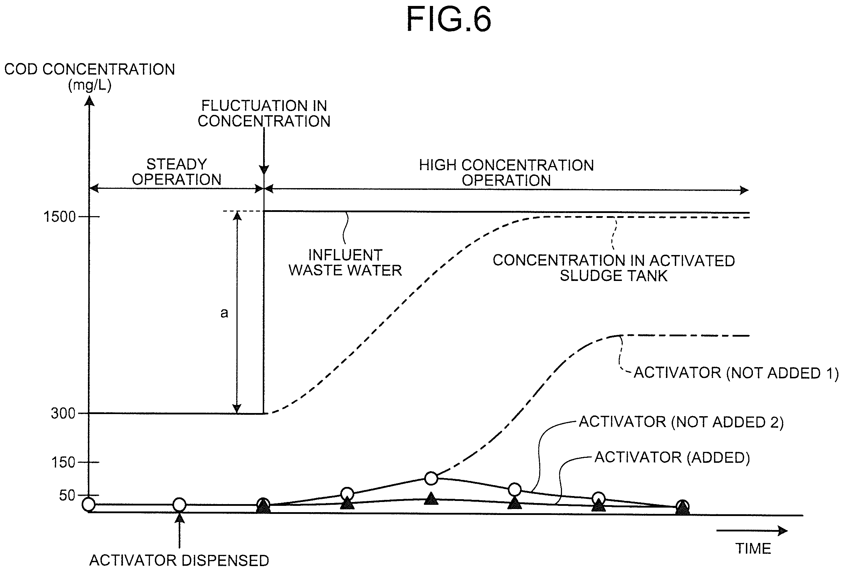

FIG. 6 is a diagram illustrating relations between treatment time and COD concentration (oxygen demand by use of potassium dichromate (CODCr)) in an activated sludge treatment apparatus.

In FIG. 6, for steady operation, the COD value of the influent waster water is about 300 mg/L.

In this steady operation, as illustrated with the reference sign, "a", in this figure, when the concentration is changed (the COD value is increased to 1500 mg/L), high concentration operation is reached.

In this high concentration operation, the COD concentration in the activated sludge treatment apparatus 14 gradually increases in the activated sludge treatment apparatus 14 if the COD is not treated (dotted line).

The COD is subjected to treatment in the activated sludge treatment apparatus 14, and the COD concentration is reduced for effluence.

Further, in a case without the activator 16 (not added 1), as the concentration of influent waste water to the activated sludge treatment apparatus 14 increases, the concentration of effluent waste water from the activated sludge treatment apparatus 14 increases, and the waste water standards (for example, a waste water reference value of 50 mg/L) are not fulfilled.

Further, in a case without the activator 16 (not added 2), as the concentration increases, the concentration increases, and the waste water standards are not temporarily fulfilled, but when the activity of the microorganisms thereafter is increased and the treatment speed is improved, the concentration of the effluent waste water is reduced (open circles in the figure).

In contrast, in a case where the activator 16 is dispensed before the increase to the high concentration, since measures for increase in the treatment speed of the activated sludge in the activated sludge treatment apparatus 14 in advance are able to be taken, the increase in the COD concentration results in a small fluctuation.

As described above, according to this embodiment, by detection in advance of a drastic load fluctuation by the organic matter concentration measurement unit 15 and addition of the activator 16 in the activated sludge treatment apparatus 14 according to a result of the detection, the treatment speed of the activated sludge treatment is able to be increased and going over waste water standard values is able to be prevented. As a result, even if there is a drastic fluctuation in the concentration, for example, waste water standards for the treated water 11C are able to be satisfied at all times.

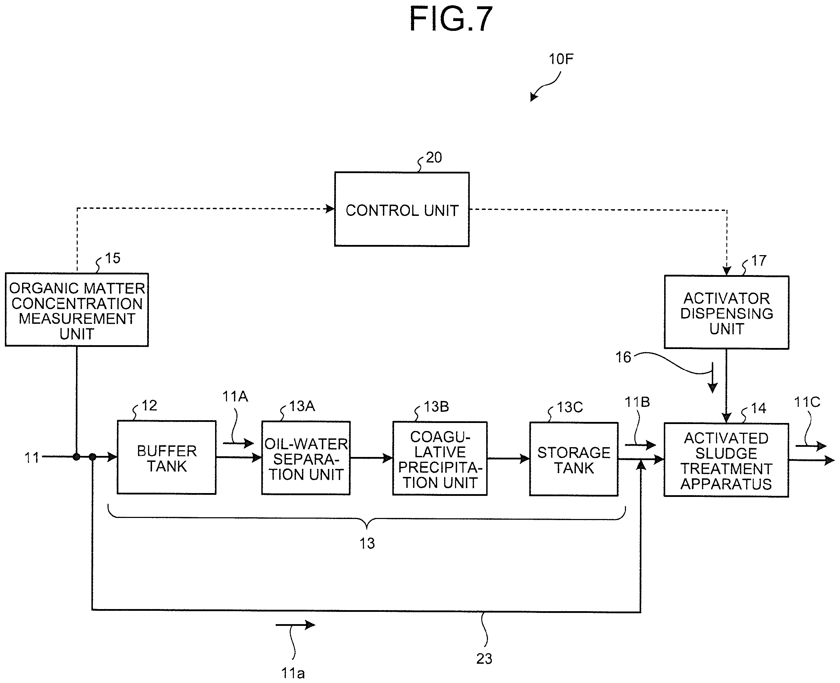

FIG. 7 is a schematic diagram of another industrial waste water treatment system according to the first embodiment.

As illustrated in FIG. 7, in an industrial waste water treatment system 10F according to this embodiment, a bypass line 23, which makes a part 11a of the industrial estate waste water 11 introduced into the buffer tank 12 bypass the primary treatment unit 13, and which introduces the part 11a to an upstream side of the activated sludge treatment apparatus 14, is provided, such that the bypassed part 11a of the industrial estate waste water 11 is mixed with the influent water 11B flowing into the activated sludge treatment apparatus 14.

When the concentration of the industrial estate waste water 11 is detected to be high by the organic matter concentration measurement unit 15, the part 11a thereof is bypassed and charged into the activated sludge treatment apparatus 14.

This amount of the bypass is equal to or less than 50% of the flow rate into the activated sludge treatment apparatus 14, and upon the introduction into the activated sludge treatment apparatus 14, the bypass is carried out such that the concentration becomes lower than (about 1/2 of) that of the high concentration waste water.

As a result, by the stagnation time needed for the treatment in the primary treatment unit 13 being skipped; before the high concentration waste water via the primary treatment unit 13 arrives, high concentration waste water of the same composition is able to be used as the activator.

Since the composition to be added as the activator is the same as the composition of the high concentration waste water that arrives via the primary treatment unit 13, the effect of improvement in the activity of the activated sludge by the activator in the activated sludge treatment apparatus 14 is able to be increased more, and the treatment speed of the high concentration waste water arriving via the primary treatment unit 13 is able to be increased.

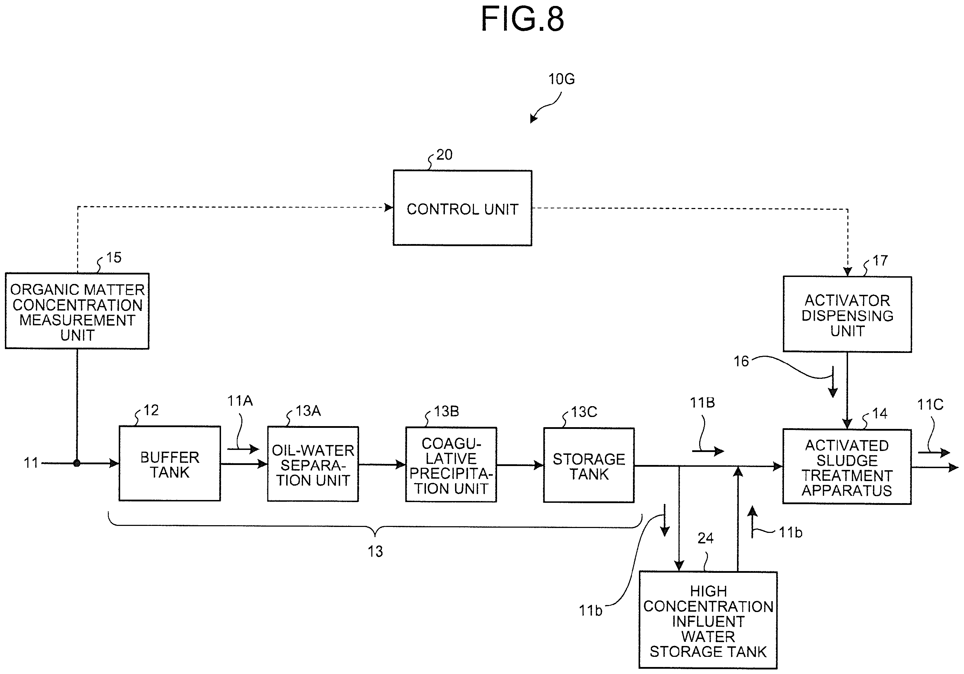

FIG. 8 is a schematic diagram of another industrial waste water treatment system according to the first embodiment.

As illustrated in FIG. 8, in an industrial waste water treatment system 10G according to this embodiment, when the influent water 11B before flowing into the activated sludge treatment apparatus 14 is high concentration waste water, a part 11b of that high concentration influent water is separated and stored into a high concentration influent water storage tank 24, and according to the treatment performance of the activated sludge thereafter, the part 11b is supplied.

In this case, the supply to the activated sludge treatment apparatus 14 does not need to be carried out continuously and constantly, and may be carried out less at an early stage of the supply of the activator when the treatment performance is low and more at a later stage of the supply of the activator. Further, in a case where the organic matter concentration is low and the addition of the activator 16 is not needed, rather, by increase in the concentration through continuous addition of the high concentration influent water 11b little by little, the treatment performance is able to be increased. Since increase in the concentration and decrease in the concentration are both not desirable in biological treatments, rather than by the concentration being changed by the activator 16, by the temporarily stored high concentration influent water 11b being added while the amount of supply of the high concentration influent water 11b is adjusted, the concentration is able to be maintained constantly.

In the first embodiment, although the activator 16 is dispensed by use of the organic matter concentration measurement unit 15, if an increase in the organic matter concentration is known in advance, regardless of whether or not the measurement of the organic matter concentration is done, the activator 16 is able to be added.

For example, the organic matter concentration in industrial estates has been empirically known to increase at a time of high operation. Thus, by addition of the activator 16 a few days before the time of high operation, the increase in the organic matter concentration due to the time of high operation is able to be dealt with in advance. As described above, the activator 16 may be used in advance, based on an operation plan.

For that, the organic matter concentration measurement unit 15 determines whether or not the organic matter concentration in waste water is within a supposed range, and if it is within the supposed range, the activator 16 does not need to be dispensed. In contrast, if it is confirmed that there is an increase in the concentration more than supposed, the activator 16 is dispensed, and preparation for waste water treatment for the high concentration may be made.

### Second Embodiment

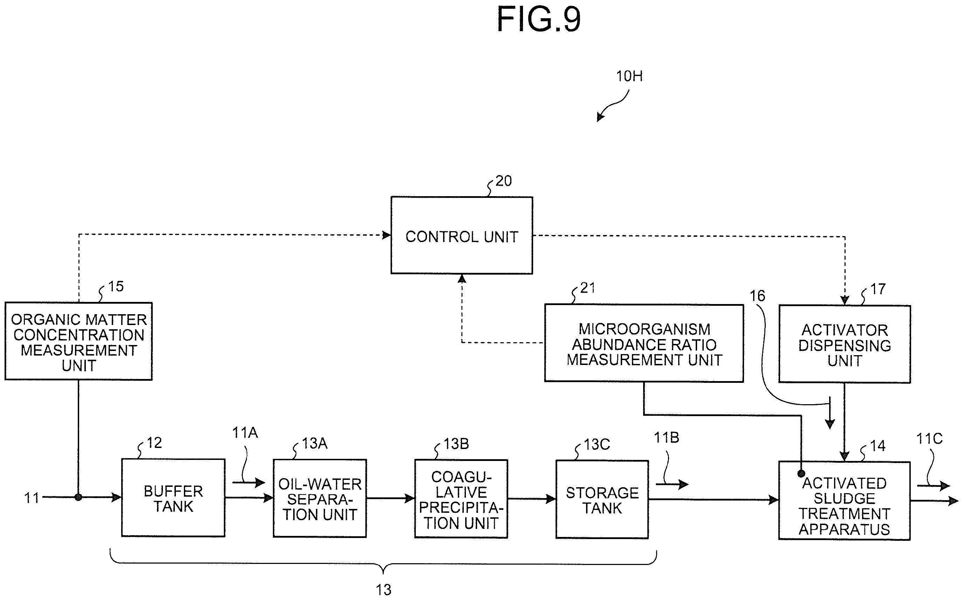

FIG. 9 is a schematic diagram of an industrial waste water treatment system according to a second embodiment. To members that are the same as those of the configuration of the first embodiment, the same reference signs will be appended and redundant description thereof will be omitted. As illustrated in FIG. 9, an industrial waste water treatment system 10H according to this embodiment further includes, in the industrial waste water treatment system 10A of the first embodiment, a microorganism abundance ratio measurement unit 21 that executes analysis (identification and quantification) on types of important microorganisms of the activated sludge treatment apparatus 14 that is the secondary treatment unit. Based on results measured by this microorganism abundance ratio measurement unit 21, whether or not the important microorganisms corresponding to the composition in the industrial estate waste water 11 found from a measurement result of the organic matter concentration measurement unit 15 are appropriate is determined; and if, as a result of the determination, the important microorganisms are not appropriate, the activity of the important microorganisms contributing to the activated sludge treatment of the activated sludge treatment apparatus 14 is improved by addition of the activator 16 corresponding to the determined composition.

The important microorganisms measured by this microorganism abundance ratio measurement unit 21 refer to microorganisms, which have been identified in advance by a bacterial flora analysis method and are particularly important to identification of the activated sludge, from the microorganisms of the activated sludge treatment apparatus 14.

Examples of these important microorganisms include bacteria that increase in their ratios in the activated sludge treatment, such as: organic matter decomposing bacteria that decompose organic matter in waste water (for example, Sphingobacteriales); petroleum component decomposing bacteria that decompose petroleum components (for example, Rhodocyclaceae); and autotrophic bacteria (for example, Hydrogenophilaceae, and Thiobacillus).

Further, examples of the important microorganisms can include bacteria that are preferably reduced in their ratios in the activated sludge treatment, such as anaerobic bacteria (for example, Bacteroidales, Treponema, and W22).

In this embodiment, for identification of the important microorganisms in advance by bacterial flora analysis, and quick measurement of the identified important microorganisms; PCR primers (forward primer and reverse primer) and probes for microorganism abundance ratio measurement are generated. Thereafter, realtime PCR by SYBR Green method is executed, and balance of the important microorganisms in the activated sludge treatment apparatus 14 is checked.

Specifically, by execution of PCR with 16SrRNA or rDNA being a template, by use of a primer that detects particular organic matter decomposing bacteria of Sphingobacteriales, and a forward primer and a reverse primer having sequences of probes; a nucleic acid fragment having a base sequence between the pair of primers and having been amplified is able to be obtained, and the ratio of, for example, the organic matter decomposing bacteria of Sphingobacteriales, which are the important microorganisms, is able to be measured.

When this PCR is executed, a nucleic acid fragment of a particular sequence is preferably used as a probe by being labeled with a labeling substance, because the state of amplification in the process of PCR is able to be detected thereby. As the labeled probe, a nucleic acid fragment may be used, which is obtained by a nucleic acid fragment being labeled by being bound with a labeling substance, such as a radioactive element, an enzyme, a fluorescent substance, or a chemical substance.

As a result of this measurement of the quantitative PCR, what kind of ratios the important microorganisms of the activated sludge treatment apparatus 14 presently are in is able to be known.

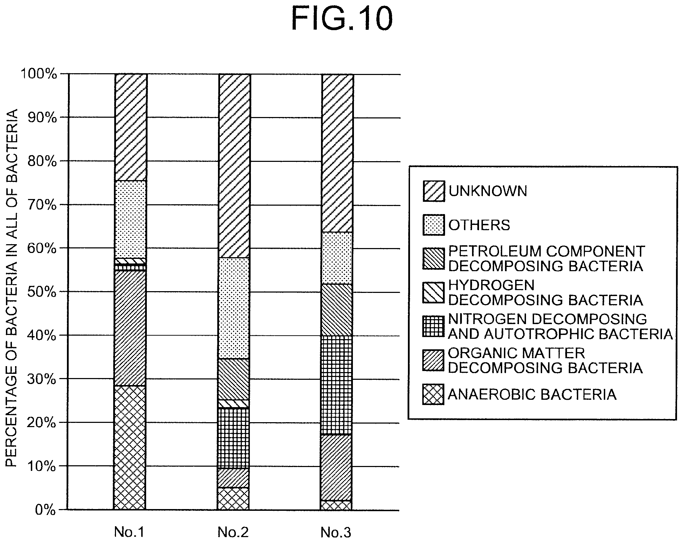

FIG. 10 is a diagram illustrating an example of results measured by the microorganism abundance ratio measurement unit. As illustrated in FIG. 10, a measurement No. 1 indicates balance of bacteria in a case where the important microorganisms are measured at a certain point when the activated sludge treatment apparatus 14 is carrying out the treatment (before start of addition of the activator). The state of No. 1 has a distribution in which the ratio of organic matter decomposing bacteria is large but the ratio of nitrogen decomposing and autotrophic bacteria is small.

At such ratios, if the organic matter concentration measurement unit 15 detects that the nitrogen component concentration in the industrial estate waste water 11 upstream of the buffer tank 12 is high, since nitrogen decomposition will be deficient if this state is maintained, the activator 16 that improves the activity of the nitrogen decomposing bacteria is added from the activator dispensing unit 17.

Thereby, before the industrial estate waste water 11 having a high nitrogen component concentration arrives at the activated sludge treatment apparatus 14, measures to increase the treatment speed of the microorganisms in advance are able to be taken.

Next, a measurement No. 2 indicates the balance in a case where the important microorganisms are measured at a certain point when the activated sludge treatment apparatus 14 is carrying out the treatment.

The state of No. 2 has a distribution in which the ratio of the organic matter decomposing bacteria is small and the ratio of nitrogen decomposing and autotrophic bacteria is large.

At such ratios, if the organic matter concentration measurement unit 15 detects that the organic component concentration in the industrial estate waste water 11 upstream of the buffer tank 12 is high, since organic matter decomposition will be deficient if this state is maintained, the activator 16 that improves the activity of the organic matter decomposing bacteria is added from the activator dispensing unit 17.

Thereby, before the industrial estate waste water 11 having a high organic component concentration arrives at the activated sludge treatment apparatus 14, measures to increase the treatment speed of the microorganisms in advance are able to be taken.

When, as a result of the addition of the activator 16 from this measurement state of No. 2, the ratios are measured by microorganism abundance ratio measurement after elapse of a predetermined time period, a state of No. 3 is confirmed. The state of No. 3 corresponds to balance of important microorganisms after the addition of the activator that activates the organic matter decomposing bacteria, and increase in the ratio of the organic matter decomposing bacteria is able to be confirmed.

If, in such a state, the organic matter concentration measurement unit 15 detects that the hydrogen component concentration in the industrial estate waste water 11 is high, since hydrogen decomposition will be deficient if this state is maintained, the activator 16 that improves the activity of hydrogen decomposing bacteria is added from the activator dispensing unit 17.

That is, at an early stage, anaerobic bacteria is abundant, but as the operation proceeds through the addition of the activator 16, the anaerobic bacteria decrease, the organic matter decomposing bacteria, petroleum component decomposing microorganisms, and nitrogen decomposing and autotrophic microorganisms are increased, and thus the ratios among the important microorganisms are changed. Since these important microorganisms are related to the treatment speed for organic matter, by the ratios among the important microorganisms being known, the treatment performance of the activated sludge treatment apparatus 14 is able to be measured.

By this measurement by the microorganism abundance ratio measurement, the current treatment performance of the activated sludge is able to be known.

If the treatment performance for organic matter is low (for example, the BOD of the treated water is high), and as a result of measurement through the microorganism abundance ratio measurement, the operation state is not suitable; by addition of the activator 16, the operation state is able to be made suitable. Further, if the abundance ratio of the important microorganisms that decompose main components of the waste water is small, similarly, by addition of a microbiologic agent, organic matter, a nutrient salt, or the like, the decomposition speed of important organic matter is improved.

An operation by a combination of the organic matter concentration measurement unit and the microorganism abundance ratio measurement unit will now be described.

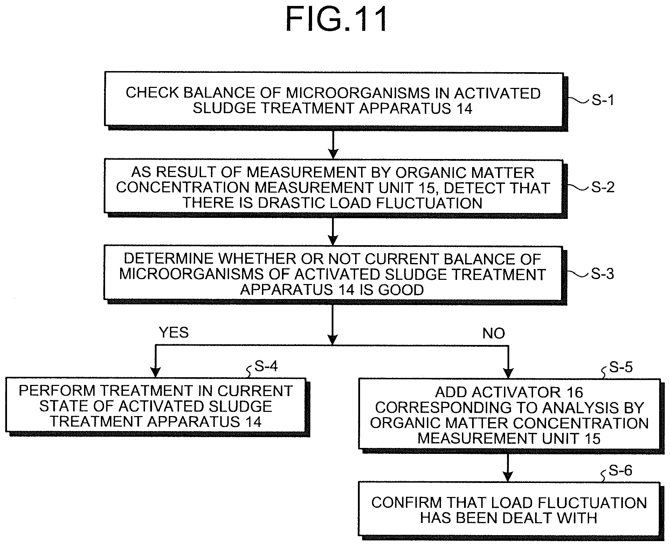

FIG. 11 is a flow diagram of a process, in which the microorganism abundance ratio measurement unit is used.

As illustrated in FIG. 11, balance of microorganisms in the activated sludge treatment apparatus 14 is checked by the microorganism abundance ratio measurement unit (for example, a realtime PCR apparatus) 21 (S-1).

Next, as a result of measurement by the organic matter concentration measurement unit 15, it is detected that there is a drastic load fluctuation (S-2).

It is determined whether or not the present balance of microorganisms of the activated sludge treatment apparatus 14 is appropriate (S-3).

If it is appropriate as a result of the determination (Yes), treatment is executed in the current state of the activated sludge treatment apparatus 14 (S-4).

In contrast, if it is not appropriate as a result of the determination (No), the activator 16 corresponding to analysis by the organic matter concentration measurement unit 15 is added from the activator dispensing unit 17 (S-5).

After elapse of a predetermined time period, it is confirmed that the balance of bacteria is changed and corresponds to the load fluctuation (S-6).

If it is not appropriate as a result of the determination at Step (S-3), the following measures may be taken further.

If the ratio of microorganisms desired to be grown is small in the current balance of microorganisms of the activated sludge treatment apparatus, the activator may be added, and if the ratio of microorganisms (anaerobic bacteria) desired to be decreased is large in the current balance of microorganisms of the activated sludge treatment apparatus, the amount of air or oxygen charged in may be increased.

Further, if information, which indicates that waste water will be contaminated with a petroleum based substance in a certain factory, has been gathered from a few days therebefore, in the first embodiment, the activator 16 is normally added in preparation therefor, but in the second embodiment, the microorganism abundance ratio measurement unit 21 firstly measures ratios among the important microorganisms, and if it is confirmed that the ratio of petroleum component decomposing bacteria is already sufficient as a result of this measurement, the addition of the activator 16 becomes unnecessary, and wasted addition of the activator 16 is able to be avoided.

In this embodiment, as to the microorganism abundance ratio measurement unit 21, although the realtime PCR apparatus is used as a unit that executes bacterial flora analysis quickly, the present invention is not limited thereto, and for example, an abundance ratio of a particular important microorganism may be measured by application of: a method, in which messenger RNA or the like is analyzed; a flow cytometry method, to which a probe that hybridizes a specific DNA is applied and in which a particular microorganism is optically analyzed; or the like.

### Third Embodiment

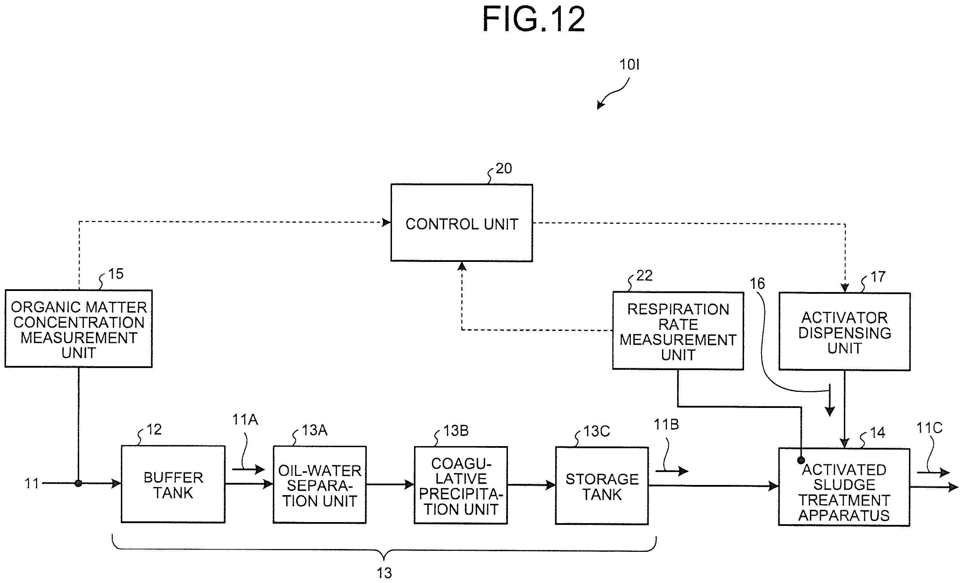

FIG. 12 is a schematic diagram of an industrial waste water treatment system according to a third embodiment. To members that are the same as those of the configuration of the first embodiment, the same reference signs will be appended and redundant description thereof will be omitted. As illustrated in FIG. 12, an industrial waste water treatment system 10I according to this embodiment: further includes, in the industrial waste water treatment system 10A of the first embodiment, a respiration rate measurement unit 22 that measures respiration rate of the activated sludge treatment apparatus 14; determines whether or not a result of the measurement by the respiration rate measurement unit 22 is appropriate; and if, as a result of the determination, the result is not appropriate, improves activity of microorganisms that contribute to treatment in the activated sludge treatment apparatus 14 by adding the activator 16 corresponding to the determined composition.

By this analysis of the respiration rate, the current treatment performance of the activated sludge is able to be known.

A relation between decomposition of organic matter and consumption of dissolved oxygen DO corresponds to the following reaction, and oxygen is consumed when organic matter is decomposed. Therefore, from rate of decrease in oxygen concentration, decomposition rate of organic matter is able to be guessed. For example, decomposition of glucose will be expressed.

C₆H₁₂O₆ + O₂ → 6CO₂ + 6H₂O

Therefore, if the treatment performance for organic matter is low (for example, the BOD of the treated water is high), and as a result of the measurement of the respiration rate, the operation state is not suitable, by addition of the activator, the operation state is able to be made suitable.

By this measurement of the respiration rate, when the respiration rate with respect to a main component of the waste water is less than a predetermined value: a microbiologic agent or organic matter (= same as the main component of the waste water), which is suitable for decomposition of that substance; a nutritive salt; or the like is added as the activator.

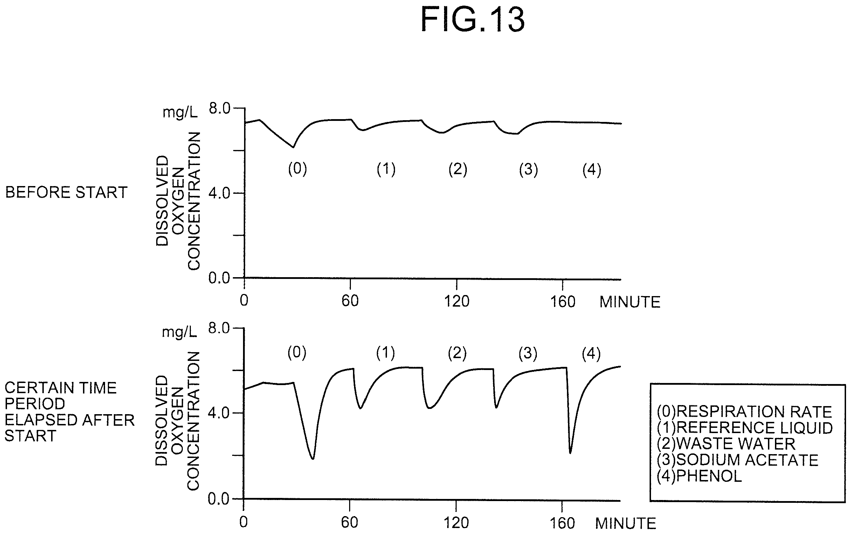

FIG. 13 is a diagram illustrating results of measurement of respiration rate.

In FIG. 13, the horizontal axis indicates time and the vertical axis indicates dissolved oxygen concentration.

As a respiration rate measuring device, "TS checker (trade name)", which is made by Ogawa Environment Research Institute, Inc., was used.

In this graph, the rate of decrease in the dissolved oxygen corresponds to oxygen consumption rate, that is, the respiration rate. From this respiration rate, the treatment speed of decomposition of organic matter is able to be known.

The upper graph in FIG. 13 illustrates a state before acclimation of the activated sludge before start of a test (= organic matter treatment performance is low), and the lower graph in FIG. 13 is a graph after elapse of a certain time period (after acclimation of the activated sludge (= organic matter treatment performance is high)).

In FIG. 13, (0) to (4) are dissolved oxygen concentration graphs where (0) corresponds to the respiration rate, (1) to addition of a reference liquid, (3) to addition of sodium acetate, and (4) to addition of a phenolic compound. A respiration rate is able to be found from a slope on this graph. For example, when graphs of the respiration rate (0) are compared, it is found that the slope on the graph becomes steep after the test, and the respiration rate is increased. Further, when graphs of the phenolic compound (4) are compared, the respiration rate, that is, the phenol decomposition rate, is almost none before the test, but the respiration rate is increased after the test, and thus it has been confirmed that the phenol decomposition rate also improved.

As described above, by measurement of the respiration rate by the respiration rate measurement unit 22, the current organic matter treatment performance of the activated sludge of the activated sludge treatment apparatus 14 is able to be measured.

### Fourth Embodiment

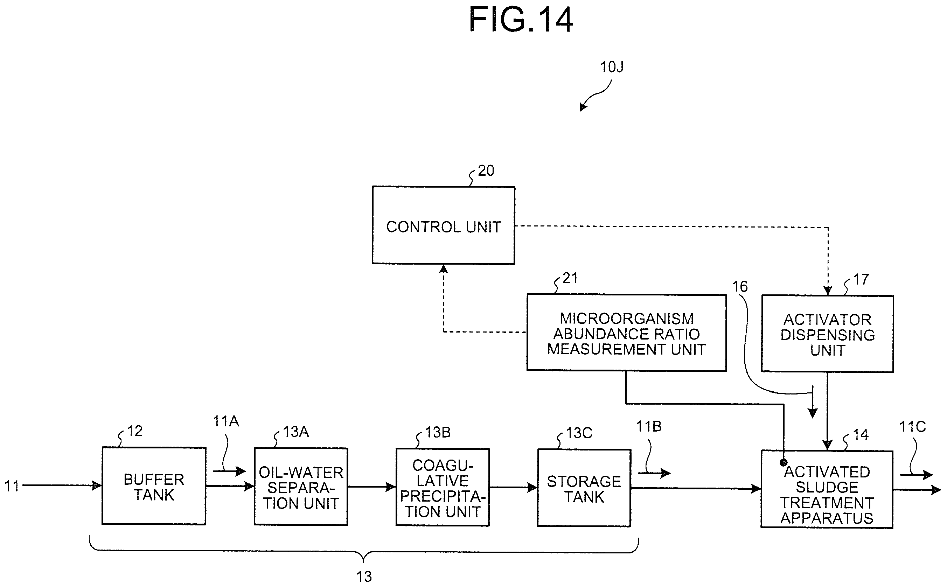

FIG. 14 is a schematic diagram of an industrial waste water treatment system according to a fourth embodiment. To members that are the same as those of the configurations of the first and second embodiments, the same reference signs will be appended and redundant description thereof will be omitted. As illustrated in FIG. 14, an industrial waste water treatment system 10J according to this embodiment includes: the buffer tank 12 that temporarily receives and stores therein the industrial estate waste water 11; the primary treatment unit 13 that performs a primary treatment on the effluent water 11A from the buffer tank 12; the secondary treatment unit (activated sludge treatment apparatus) 14 that performs a secondary treatment on the influent water 11B that has been treated by the primary treatment unit 13, by using microorganisms; the activator dispensing unit 17 that dispenses the activator 16 that activates the microorganisms, into the activated sludge treatment apparatus 14 that is the secondary treatment unit; and the microorganism abundance ratio measurement unit 21 that executes analysis (identification and quantification) on types of important microorganisms of the secondary treatment unit (activated sludge treatment apparatus) 14; the industrial waste water treatment system 10J determines, based on results measured by the microorganism abundance ratio measurement unit 21, whether or not microorganisms corresponding to a composition in the industrial estate waste water 11 are appropriate; and if, as a result of the determination, the microorganisms are not appropriate, the industrial waste water treatment system 10J improves activity of microorganisms contributing to the activated sludge treatment of the secondary treatment unit (activated sludge treatment apparatus) 14 by dispensing the activator 16 corresponding to the determined composition.

In the industrial waste water treatment system 10J of this embodiment, the organic matter concentration measurement unit 15 has been deleted from the industrial waste water treatment system 10H of the second embodiment.

In the second embodiment, the organic matter concentration measurement unit 15 is used, but in this embodiment, just by the microorganism abundance ratio measurement unit 21, balance of the microorganisms in the activated sludge treatment apparatus 14 is checked, measures corresponding to that balance are taken, and thereby, the activated sludge treatment apparatus 14 is brought into a good state.

Important microorganisms desired to be grown and important microorganisms desired to be decreased are found according to the current balance in the activated sludge treatment apparatus 14 by use of this microorganism abundance ratio measurement unit 21, measures corresponding thereto are taken, and thereby, the activated sludge treatment apparatus 14 is able to be maintained in an appropriate state.

The microorganisms desired to be grown are anaerobic bacteria, and if, for example, the abundance of organic matter decomposing microorganisms, nitrogen decomposing microorganisms, autotrophic microorganisms, and petroleum component decomposing microorganisms is small, the activator 16 that causes growth thereof is added.

For example, if organic matter decomposing microorganisms are desired to be grown, organic matter (for example, a saccharide, an alcohol, or the like) is added as the activator 16.

If nitrogen decomposing microorganisms are desired to be grown, ammonia, ammonium sulfide, ammonium chloride, or urea, for example, is added as the activator 16.

If autotrophic microorganisms are desired to be grown, a metal (for example, iron, nickel, manganese, or cobalt) is added as the activator 16.

If petroleum component decomposing microorganisms are desired to be grown; phenol, benzene, toluene, ethylbenzene, or xylene, for example, is added as the activator 16, for decomposition of aromatic organic carbons. Further, if microorganisms for decomposition of straight chain organic carbons are desired to be grown, a vegetable oil or the like is added as the activator 16.

Further, if, from results of the measurement by the microorganism abundance ratio measurement unit 21, the abundance of the microorganisms desired to be decreased is large, the abundance of anaerobic microorganisms, H₂ producing bacteria, methane producing bacteria, sulfate-reducing bacteria, or the like is found, and an enzyme is added, or oxygen (air) is supplied, for reduction of the abundance.

According to this embodiment, by the measurement by the microorganism abundance ratio measurement unit 21 of the activated sludge treatment apparatus 14: the current state of microorganisms is found; from the found results, microorganisms desired to be grown and microorganisms desired to be decreased are found; measures corresponding thereto (addition of the activator 16 or oxygen) are taken; and thereby the activated sludge treatment apparatus 14 is able to be maintained in an appropriate state.

Further, in the fourth embodiment also, mixture with the influent water flowing into the secondary treatment unit by use of the bypass line 23 of the industrial waste water treatment system 10F described in the first embodiment may be carried out; or the high concentration influent water storage tank 24, which temporarily stores influent water having high organic matter concentration from the primary treatment unit 13 of the industrial waste water treatment system 10G, may be provided, and the high concentration influent water, instead of the activator 16, may be mixed with the influent water flowing into the secondary treatment unit.

### Reference Signs List

10A TO 10J INDUSTRIAL WASTE WATER TREATMENT SYSTEM
11 INDUSTRIAL ESTATE WASTE WATER
12 BUFFER TANK
13 PRIMARY TREATMENT UNIT
14 ACTIVATED SLUDGE TREATMENT APPARATUS
15 ORGANIC MATTER CONCENTRATION MEASUREMENT UNIT
16 ACTIVATOR
17 ACTIVATOR DISPENSING UNIT

## Claims

1. An industrial waste water treatment system, comprising:
a primary treatment unit configured to perform a primary treatment on industrial estate waste water;
a secondary treatment unit configured to perform a secondary treatment on influent water that has been treated by the primary treatment unit, by using activated sludge;
an organic matter concentration measurement unit configured to measure an organic matter concentration in the industrial estate waste water flowing into the primary treatment unit; and
an activator dispensing unit configured to dispense, into the secondary treatmentunit, an activator that activates important microorganisms included in the activated sludge, wherein
the industrial waste water treatment system is configured to determine, from a result of the measurement by the organic matter concentration measurement unit, a composition in the influent water, perform dispensing of an activator corresponding to the determined composition, and improve activity of the important microorganisms by this dispensing of the activator.

2. The industrial waste water treatment system according to claim 1, wherein the primary treatment unit has a buffer tank that temporarily receives and stores therein the industrial estate waste water, and an organic matter concentration in the industrial estate waste water flowing into the buffer tank is measured by the organic matter concentration measurement unit.

3. The industrial waste water treatment system according to claim 1 or 2, comprising:
a microorganism abundance ratio measurement unit configured to perform abundance ratio measurement for the important microorganisms of the secondary treatment unit, wherein
the industrial waste water treatment system is configured to determine, based on results measured by the microorganism abundance ratio measurement unit, whether or not the important microorganisms corresponding to the composition in the influent water found from the result of the measurement by the organic matter concentration measurement unit are appropriate, and
if, as a result of the determination, the important microorganisms are not appropriate, the industrial waste water treatment system is configured to improve activity of important microorganisms contributing to an activated sludge treatment in the secondary treatment unit by dispensing an activator corresponding to the determined composition.

4. The industrial waste water treatment system according to claim 1 or 2, comprising:
a respiration rate measurement unit configured to find a state of activity of microorganisms of the secondary treatment unit, wherein
the industrial waste water treatment system is configured to determine whether or not a result of measurement by the respiration rate measurement unit is appropriate, and
if, as a result of the determination, the result is not appropriate, the industrial waste water treatment system is configured to improve activity of microorganisms contributing to a treatment in the secondary treatment unit by dispensing an activator corresponding to the determined composition.

5. The industrial waste water treatment system according to any one of claims 2 to 4, comprising:
a bypass line that draws out a part of influent water before the influent water flows into the buffer tank, and that bypasses the primary treatment unit, wherein
the industrial waste water treatment system is configured to perform mixture with the influent water flowing into the secondary treatment unit.

6. The industrial waste water treatment system according to any one of claims 1 to 4, wherein if an organic matter concentration in the influent water is high,
a high concentration waste water storage tank that temporarily stores the influent water having the high organic matter concentration from the primary treatment unit is provided, and
the influent water having the high organic matter concentration, instead of the activator, is mixed with the influent water flowing into the secondary treatment unit.

7. An industrial waste water treatment system, comprising:
a primary treatment unit configured to perform a primary treatment on industrial estate waste water;
a secondary treatment unit configured to perform a secondary treatment on influent water that has been treated by the primary treatment unit, by using microorganisms;
an activator dispensing unit configured to dispense, into the secondary treatment unit, an activator that activates the microorganisms; and
a microorganism abundance ratio measurement unit configured to perform analysis on types of important microorganisms of the secondary treatment unit, wherein
the industrial waste water treatment system is configured to determine, based on results analyzed by the microorganism abundance ratio measurement unit, whether or not the microorganisms corresponding to a composition in the influent water are appropriate, and
if, as a result of the determination, the microorganisms are not appropriate, the industrial waste water treatment system is configured to improve activity of important microorganisms contributing to an activated sludge treatment of the secondary treatment unit by dispensing an activator corresponding to the determined composition.

8. The industrial waste water treatment system according to claim 7, wherein the primary treatment unit has a buffer tank that temporarily receives and stores therein the industrial estate waste water.

9. The industrial waste water treatment system according to claim 8, comprising:
a bypass line that draws out a part of influent water before the influent water flows into the buffer tank, and bypasses the primary treatment unit, wherein
the industrial waste water treatment system is configured to perform mixture with the influent water flowing into the secondary treatment unit.

10. The industrial waste water treatment system according to any one of claims 7 to 9, wherein if an organic matter concentration in the influent water is high,
a high concentration waste water storage tank that temporarily stores the influent water having the high organic matter concentration from the primary treatment unit is provided, and
the influent water having the high organic matter concentration, instead of the activator, is mixed with the influent water flowing into the secondary treatment unit.

11. The industrial waste water treatment system according to any one of claims 1 to 10, comprising:
a membrane treatment apparatus configured to perform a membrane treatment on effluent water from the secondary treatment unit; and
a regeneration treatment apparatus configured to regenerate the effluent water that has been treated by the membrane treatment apparatus.

12. An industrial waste water treatment method, comprising:
a primary treatment process of performing a primary treatment on industrial estate waste water;
a secondary treatment process of performing a secondary treatment on influent water that has been treated in the primary treatment process, by using activated sludge;
an organic matter concentration measurement process of measuring an organic matter concentration in the industrial estate waste water flowing into the primary treatment process; and
an activator dispensing process of dispensing, into the secondary treatment process, an activator that activates important microorganisms included in the activated sludge, wherein
from a result of the measurement in the organic matter concentration measurement process, a composition in the influent water is determined, an activator corresponding to the determined composition is dispensed, and activity of the important microorganisms is improved by this dispensing of the activator.

13. The industrial waste water treatment method according to claim 12, wherein in the primary treatment process, the industrial estate waste water is temporarily received and stored, and an organic matter concentration in the industrial estate waste water flowing in before this storage is measured.

14. The industrial waste water treatment method according to claim 12 or 13, comprising:
a process of performing abundance ratio measurement for the important microorganisms in the secondary treatment process, wherein
based on results of the abundance ratio measurement for the important microorganisms, whether or not microorganisms corresponding to the composition in the influent water found from the result of the measurement in the organic matter concentration measurement process are appropriate is determined, and
if, as a result of the determination, the microorganisms are not appropriate, activity of important microorganisms contributing to an activated sludge treatment in the secondary treatment process is improved by an activator being dispensed, the activator corresponding to the determined composition.

15. The industrial waste water treatment method according to claim 12 or 13, comprising:
a respiration rate measurement process of finding a state of activity of microorganisms of the secondary treatment process, wherein
whether or not a result of measurement in the respiration rate measurement process is appropriate is determined, and
if, as a result of the determination, the result is not appropriate, activity of microorganisms contributing to a treatment in the secondary treatment process is improved by an activator being dispensed, the activator corresponding to the determined composition.

16. The industrial waste water treatment method according to any one of claims 12 to 15, comprising:
a process of drawing out a part of influent water before the influent water flows into a storage process, and bypassing the primary treatment process, wherein
mixture with the influent water flowing into the secondary treatment process is performed.

17. The industrial waste water treatment method according to any one of claims 12 to 16, wherein if an organic matter concentration of the influent water is high,
a process of temporarily storing influent water of the primary treatment process is provided, and
the influent water having the high organic matter concentration, instead of the activator, is mixed with the influent water flowing into the secondary treatment process.

18. An industrial waste water treatment method, comprising:
a primary treatment process of performing a primary treatment on industrial estate waste water;
a secondary treatment process of performing a secondary treatment on influent water that has been treated in the primary treatment process, by using microorganisms;
an activator dispensing process of dispensing, into the secondary treatment process, an activator that activates the microorganisms; and
a microorganism abundance ratio measurement process of performing analysis on types of important microorganisms of the secondary treatment process, wherein
based on results analyzed in the microorganism abundance ratio measurement process, whether or not the microorganisms corresponding to a composition in the influent water are appropriate is determined, and
if, as a result of the determination, the microorganisms are not appropriate, activity of important microorganisms contributing to an activated sludge treatment in the secondary treatment process is improved by an activator being dispensed, the activator corresponding to the determined composition.

19. The industrial waste water treatment method according to claim 18, wherein in the primary treatment process, the industrial estate waste water is temporarily received and stored in a buffer tank.

20. The industrial waste water treatment method according to claim 19, comprising:
a bypass line process of drawing out a part of influent water before the influent water flows into the buffer tank, and bypassing the primary treatment process, wherein
mixture with the influent water flowing into the secondary treatment process is performed.

21. The industrial waste water treatment method according to any one of claims 12 to 20, wherein if an organic matter concentration of the influent water is high,
the influent water having the high organic matter concentration from the primary treatment process is temporarily stored in a high concentration waste water storage tank, and
the influent water having the high organic matter concentration, instead of the activator, is mixed with the influent water flowing into the secondary treatment process.

22. The industrial waste water treatment method according to any one of claims 12 to 21, comprising:
a membrane treatment process of performing a membrane treatment on effluent water from the secondary treatment process; and
a regeneration treatment process of regenerating the effluent water that has been treated in the membrane treatment process.
